# EUROPÄISCHE PATENTSCHRIFT

(11) **EP 3 564 466 B1**
(45) Veröffentlichungstag und Bekanntmachung des Hinweises auf die Patenterteilung: **27.01.2021**
(21) Anmeldenummer: 19169754.9
(22) Anmeldetag: 17.04.2019
(51) Int. Cl.: E05B 47/02, E05B 47/00, E05C 9/10, F16D 27/118

(54) **MOTORISCHER ANTRIEB FÜR EIN TREIBSTANGENSCHLOSS**
MOTOR DRIVE FOR A ESPAGNOLETTE LOCK
COMMANDE MOTORISÉE POUR SERRURE A ESPAGNOLETTE

(30) Priorität: 03.05.2018 DE 102018206855
(43) Veröffentlichungstag der Anmeldung: 06.11.2019
(73) Patentinhaber: Aug. Winkhaus GmbH & Co. KG, 48291 Telgte (DE)
(72) Erfinder: Jakob, Sebastian, 98617 Untermaßfeld (DE)

(56) Entgegenhaltungen:
- EP-A1- 3 147 434
- EP-A1- 3 196 388
- EP-A2- 1 158 121
- DE-A1- 2 064 524
- GB-A- 1 350 310
- KR-A- 20170 085 713
- US-B1- 6 250 119

## Beschreibung

Die Erfindung betrifft einen motorischen Antrieb für ein Treibstangenschloss, mit einem Elektromotor, mit einem Getriebe zum Antrieb eines zur Koppelung mit einer Treibstange vorgesehenen Treibstangenanschlussschiebers, mit einer Kupplung zur wahlweisen Erzeugung oder Trennung eines Kraftflusses zwischen Elektromotor und Treibstangenanschlussschieber und mit einem Elektromagneten zur Ansteuerung der Kupplung.

Solche motorischen Antriebe werden in vorhandene Schlosskästen von Treibstangenschlössern integriert oder in einem separaten Gehäuse angeordnet und mit der Treibstange verbunden. In der Regel muss das Treibstangenschloss auch bei Ausfall des Antriebs durch den Elektromotor anzusteuern sein. Hierfür sind Handhaben und Schließzylinder vorgesehen. Der Elektromotor stellt dem manuellen Antrieb durch die Handhabe oder dem Schließzylinder meist einen hohen Widerstand entgegen. Häufig ist das Getriebe zudem als selbsthemmendes Schneckengetriebe ausgebildet.

Aus der Praxis ist ein motorischer Antrieb bekannt geworden, bei dem der Elektromagnet neben dem Getriebe befestigt und über ein Zwischenglied mit der Kupplung verbunden ist. Dies erfordert jedoch einen sehr großen baulichen Aufwand für den motorischen Antrieb. Weiterhin erfordert der Elektromagnet mit dem Zwischenglied einen hohen Platzbedarf. Ein hoher Platzbedarf bei einem solchen motorischen Antrieb erfordert jedoch große in einem Fenster oder einer Tür angeordnete Taschen zur Aufnahme der Bauteile. Solche großen Taschen verringern jedoch die Stabilität der Bauteile des Fensters oder der Tür.

Die US 6 250 119 B1 offenbart ein Schloss mit einem elektromotorischen Antrieb. Der elektromotorische Antrieb hat ein Riemengetriebe. Ein Rad des Riemengetriebes ist mit einem Zahnrad verbunden, welches mit einem weiteren Zahnrad in Eingriff steht. Das weitere Zahnrad hat eine von einem Elektromagneten ansteuerbare Kupplung. Damit sind der Elektromagnet und die Kupplung neben dem Getriebe angeordnet.

Die DE 20 64 524 A1 offenbart eine elektromagnetische Kupplung für Textilmaschinen. Diese elektromagnetische Kupplung löst einen Formschluss zwischen einem einzelnen Rad und einer Welle. Ein Federelement erzeugt bei stromlosen Elektromagneten den Formschluss.

Der Erfindung liegt das Problem zugrunde, einen motorischen Antrieb der eingangs genannten Art so weiter zu bilden, dass er besonders kompakt aufgebaut ist.

Dieses Problem wird erfindungsgemäß dadurch gelöst, dass der Elektromagnet zum Ansteuern der Kupplung mit einem Zahnradpaar des Getriebes eine bauliche Einheit bildet.

Durch diese Gestaltung benötigt der Elektromagnet keinen zusätzlichen Bauraum neben dem Getriebe. Durch die Integration des Elektromagneten in ein Zahnradpaar gestaltet sich der motorische Antrieb besonders kompakt. Dabei kann der Elektromagnet zum Ansteuern der Kupplung und die Kupplung grundsätzlich mit jedem Zahnradpaar des Getriebes eine bauliche Einheit eingehen. Das erste Zahnradpaar des Getriebes hat aber den weiteren Vorteil, dass bei der Trennung eines Kraftflusses durch die Kupplung weniger Bauteile bewegt werden und dadurch der Verschleiß möglichst gering gehalten wird.
Die Ansteuerung der Kupplung gestaltet sich hierdurch zudem besonders einfach. Im einfachsten Fall kann die Kupplung zusammen mit dem Elektromotor angesteuert werden. Als Kupplung kann hierbei beispielsweise eine kraftschlüssige Reibkupplung mit zwei aneinander reibenden Flächen eingesetzt werden.

Der motorische Antrieb gestaltet sich gemäß einer anderen vorteilhaften Weiterbildung der Erfindung besonders kompakt, wenn die Zahnräder des Zahnradpaares auf dem Elektromagneten drehbar gelagert sind. Damit sind sämtliche Bauteile zur Lagerung des Zahnradpaares auf dem Elektromagneten angeordnet.

Zur weiteren Verringerung der Abmessungen des motorischen Antriebs trägt es gemäß einer anderen vorteilhaften Weiterbildung der Erfindung bei, wenn die Kupplung eine zwischen den beiden Zahnrädern des Zahnradpaares angeordnete Axialverzahnung hat.

Das Treibstangenschloss lässt sich gemäß einer anderen vorteilhaften Weiterbildung der Erfindung ungehemmt von dem Elektromotor manuell betreiben, wenn die Kupplung von einem Federelement in die den Kraftfluss trennende Stellung vorgespannt ist. Durch diese Gestaltung muss die Kupplung nur bei aktivem motorischem Antrieb angesteuert werden. Eine dauerhafte Bestromung des die Kupplung ansteuernden Elektromagneten lässt sich hierdurch ebenfalls vermeiden.

Die Anbindung des Elektromotors an das Getriebe gestaltet sich gemäß einer anderen vorteilhaften Weiterbildung der Erfindung konstruktiv besonders einfach, wenn das durchmessergroße Zahnrad als Schneckenrad ausgebildet ist.

Der motorische Antrieb weist gemäß einer anderen vorteilhaften Weiterbildung der Erfindung einen besonders kompakten Aufbau auf, wenn ein Spulenkörper des Elektromagneten die Drehachse des Zahnradpaares konzentrisch umschließt.

Eine elektrische Kontaktierung des Elektromagneten gestaltet sich gemäß einer anderen vorteilhaften Weiterbildung der Erfindung besonders einfach, wenn der Elektromagnet in einem Gehäuse des motorischen Antriebs befestigt ist.

Der motorische Antrieb weist gemäß einer anderen vorteilhaften Weiterbildung der Erfindung eine besonders hohe Stabilität auf, wenn ein Anker des Elektromagneten einen Teilbereich des durchmessergroßen Zahnrades des Zahnradpaares übergreift.

Die Übertragung der magnetischen Kräfte von dem Spulenkörper auf den Anker gestaltet sich gemäß einer anderen vorteilhaften Weiterbildung der Erfindung besonders kompakt, wenn der Anker mit einem in der Drehachse des Zahnradpaares angeordneten Zapfen verbunden ist. Durch den Zapfen lässt sich die axiale Bewegung des Ankers zuverlässig führen.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: eine Fenstertür mit einem Treibstangenschloss und einem motorischen Antrieb,
- Fig. 2: der motorische Antrieb aus Figur 1 in einer stark vergrößerten Darstellung,
- Fig. 3: eine vergrößerte Schnittdarstellung durch ein Zahnradpaar mit einer Kupplung des motorischen Antriebs aus Figur 2,
- Fig. 4: eine Draufsicht auf einen Teilbereich der Kupplung aus Figur 3.

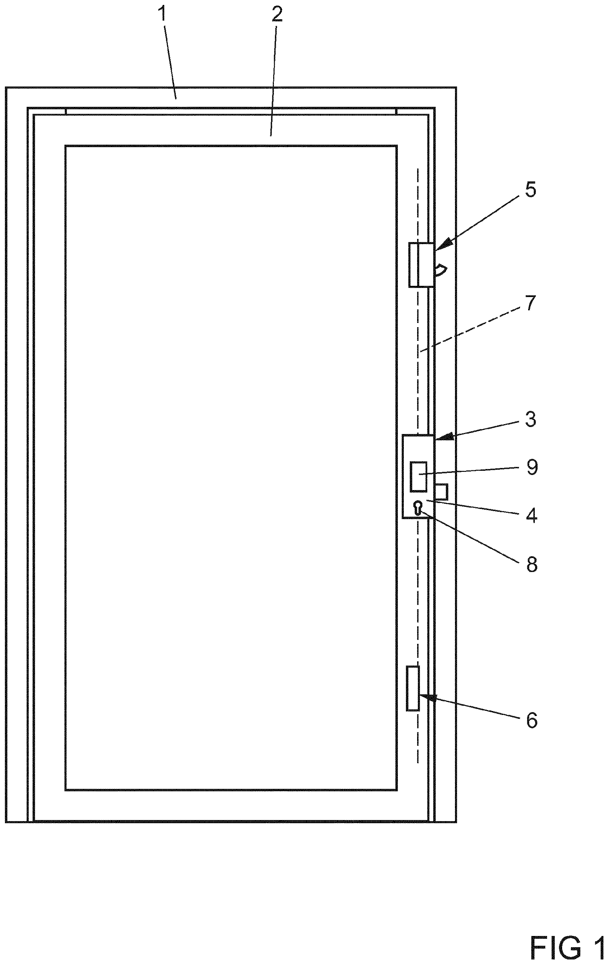

Figur 1 zeigt eine Fenstertür mit einem gegen einen Rahmen 1 schwenkbaren Flügel und mit einem Treibstangenschloss 3. Das Treibstangenschloss 3 hat ein Hauptschloss 4 und beispielhaft ein Nebenschloss 5 und einen motorischen Antrieb 6. Der motorische Antrieb 6, das Hauptschloss 4 und das Nebenschloss 5 sind über eine längsverschieblich im Flügel 2 geführte Treibstange 7 miteinander verbunden. Das Hauptschloss 4 hat einen Schließzylinder 8 und eine Handhabe 9 zum Antrieb der Treibstange 7. Bei der Handhabe 9 kann es sich beispielsweise um einen Sensortaster zur Ansteuerung des motorischen Antriebs 6 handeln. Das Treibstangenschloss 3 lässt sich wahlweise manuell über den Schließzylinder 8 oder durch Ansteuern des motorischen Antriebs 6 antreiben und damit der Flügel 2 in dem Rahmen 1 wahlweise verriegeln oder entriegeln.

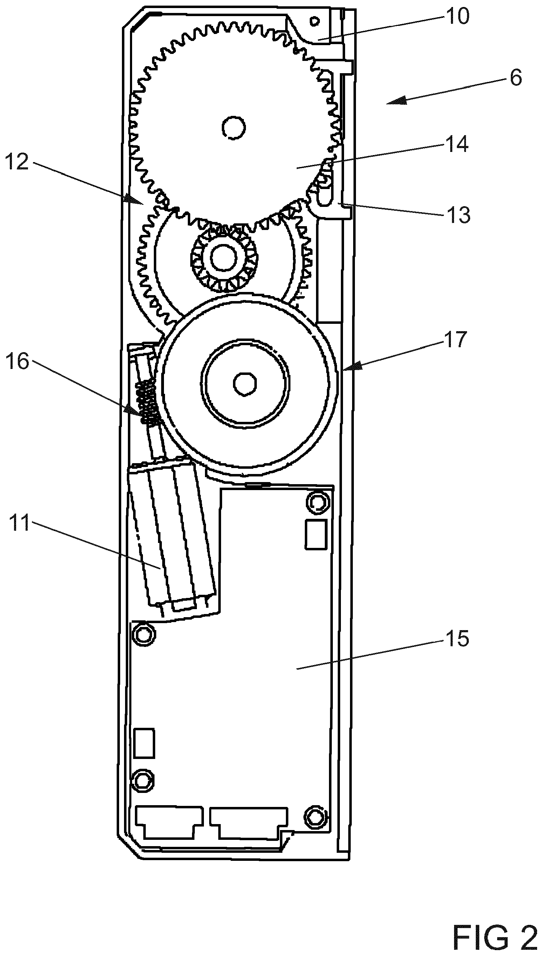

Figur 2 zeigt den motorischen Antrieb 6 aus Figur 1 in einer stark vergrößerten Darstellung. Der motorische Antrieb 6 hat einen in einem Gehäuse 10 angeordneten Elektromotor 11 und ein Getriebe 12 zum Antrieb eines längsverschieblich geführten Treibstangenanschlussschiebers 13. Der Treibstangenanschlussschieber 13 hat eine von einem Zahnrad 14 des Getriebes 12 verdeckte und zur Vereinfachung der Zeichnung nicht dargestellte Zahnstange. Weiterhin ist in dem Gehäuse 10 eine Steuereinheit 15 zur Ansteuerung des Elektromotors 11 und zur Überwachung der Stellung des Treibstangenanschlussschiebers 13 angeordnet. Der Elektromotor 11 ist über ein selbsthemmendes Schneckengetriebe 16 mit einem Zahnradpaar 17 des Getriebes 12 verbunden.

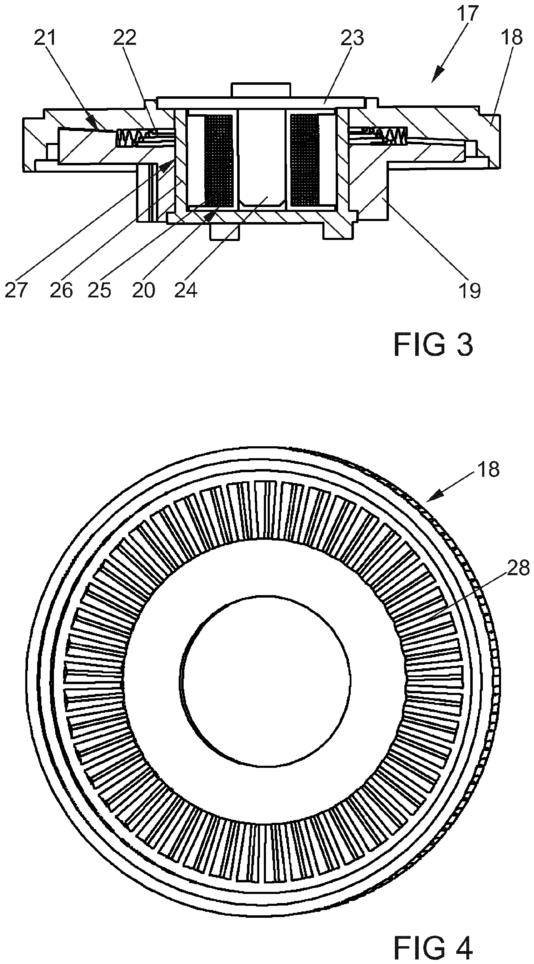

Figur 3 zeigt das mit dem Elektromotor 11 verbundene Zahnradpaar 17 in einer Schnittdarstellung. Das Zahnradpaar 17 hat ein durchmessergroßes, als Schneckenrad ausgebildetes Zahnrad 18 und ein durchmesserkleines Zahnrad 19 des Getriebes 12. Die beiden Zahnräder 18, 19 des Zahnradpaares 17 sind über eine mittels eines Elektromagneten 20 schaltbare Kupplung 21 miteinander gekoppelt. Ein Federelement 22 spannt die Kupplung 21 in eine den Kraftfluss trennende Stellung vor, während der Elektromagnet 20 über einen das durchmessergroße Zahnrad 18 hintergreifenden Anker 23 die Kupplung 21 in eine den Kraftfluss zwischen den Zahnrädern 18, 19 erzeugende Stellung vorspannt. Der Anker 23 ist einstückig mit einem Zapfen 24 gefertigt. Der Zapfen 24 ist auf einer Drehachse der Zahnräder 18, 19 angeordnet. Der Elektromagnet 20 hat zudem einen feststehend in dem in Figur 2 dargestellten Gehäuse 10 angeordneten Spulenkörper 25 mit einer Hülse 26 als Lagerung 27 der Zahnräder 18, 19 des Zahnradpaares 17.

Figur 4 zeigt das durchmessergroße Zahnrad 18 in einer Ansicht von der Seite der in Figur 3 dargestellten Kupplung 21. Hierbei ist zu erkennen, dass die Kupplung 21 eine Axialverzahnung 28 aufweist. Der gegenüberstehende Abschnitt des durchmesserkleinen Zahnrades 19 ist entsprechend komplementär aufgebaut.

## Patentansprüche

1. Motorischer Antrieb (6) für ein Treibstangenschloss (3), mit einem Elektromotor (11), mit einem Getriebe (12) zum Antrieb eines zur Koppelung mit einer Treibstange (7) vorgesehenen Treibstangenanschlussschiebers (13), mit einer Kupplung (21) zur wahlweisen Erzeugung oder Trennung eines Kraftflusses zwischen Elektromotor (11) und Treibstangenanschlussschieber (13) und mit einem Elektromagneten (20) zur Ansteuerung der Kupplung (21), **dadurch gekennzeichnet, dass** der Elektromagnet (20) zum Ansteuern der Kupplung (21) mit einem Zahnradpaar (17) des Getriebes (12) eine bauliche Einheit bildet.

2. Motorischer Antrieb nach Anspruch 1, **dadurch gekennzeichnet, dass** die Zahnräder (18, 19) des Zahnradpaares (17) auf dem Elektromagneten (20) drehbar gelagert sind.

3. Motorischer Antrieb nach Anspruch 1 oder 2, **dadurch gekennzeichnet, dass** die Kupplung (21) eine zwischen den beiden Zahnrädern (18, 19) des Zahnradpaares (17) angeordnete Axialverzahnung (28) hat.

4. Motorischer Antrieb nach zumindest einem der Ansprüche 1 bis 3, **dadurch gekennzeichnet, dass** die Kupplung (21) von einem Federelement (22) in die den Kraftfluss trennende Stellung vorgespannt ist.

5. Motorischer Antrieb nach zumindest einem der Ansprüche 1 bis 4, **dadurch gekennzeichnet, dass** das durchmessergroße Zahnrad (18) als Schneckenrad ausgebildet ist.

6. Motorischer Antrieb nach zumindest einem der Ansprüche 1 bis 5, **dadurch gekennzeichnet, dass** ein Spulenkörper (25) des Elektromagneten (20) die Drehachse des Zahnradpaares (17) konzentrisch umschließt.

7. Motorischer Antrieb nach zumindest einem der Ansprüche 1 bis 6, **dadurch gekennzeichnet, dass** der Elektromagnet (20) in einem Gehäuse (10) des motorischen Antriebs (6) befestigt ist.

8. Motorischer Antrieb nach zumindest einem der Ansprüche 1 bis 7, **dadurch gekennzeichnet, dass** ein Anker (23) des Elektromagneten (20) einen Teilbereich des durchmessergroßen Zahnrades (18) des Zahnradpaares (17) übergreift.

9. Motorischer Antrieb nach Anspruch 8, **dadurch gekennzeichnet, dass** der Anker (23) mit einem in der Drehachse des Zahnradpaares (17) angeordneten Zapfen (24) verbunden ist.

## Claims

1. A motor-operated drive (6) for a drive rod lock (3), having an electric motor (11), with a gearbox (12) for driving a drive rod connection slide (13) provided for coupling with a drive rod (7), having a coupling (21) for selective generation or separation of a force flow between electric motor (11) and drive rod connection side (13) and having an electromagnet (20) for controlling the coupling (21), **characterized in that** the electromagnet (20) for controlling the coupling (21) with a pair of gear wheels (17) of the gearbox (12) forms one structural unit.

2. The motor-operated drive according to claim 1, **characterized in that** the gear wheels (18, 19) of the pair of gear wheels (17) are rotatably mounted on the electromagnet (20).

3. The motor-operated drive according to claim 1 or 2, **characterized in that** the coupling (21) has an axial gearing (28) arranged between the two gearwheels (18, 19) of the pair of gear wheels (17).

4. The motor-operated drive according to at least one of claims 1 to 3, **characterized in that** the coupling (21) is pre-tensioned by a spring element (22) into the position separating the force flow.

5. The motor-operated drive according to at least one of claims 1 to 4, **characterized in that** the large-diameter gear wheel (18) is designed as a worm wheel.

6. The motor-operated drive according to at least one of claims 1 to 5, **characterized in that** a coil body (25) of the electromagnet (20) concentrically surrounds the axis of rotation of the pair of gear wheels (17).

7. The motor-operated drive according to at least one of claims 1 to 6, **characterized in that** the electromagnet (20) is fastened in a housing (10) of the motor-operated drive (6).

8. The motor-operated drive according to at least one of claims 1 to 7, **characterized in that** an armature (23) of the electromagnet (20) engages over a partial region of the large-diameter gear wheel (18) of the pair of gear wheels (17).

9. The motor-operated drive according to claim 8, **characterized in that** the armature (23) is connected to a pin (24) arranged in the axis of rotation of the pair of gearwheels (17).

## Revendications

1. Entraînement motorisé (6) pour une serrure à crémone (3), avec un moteur électrique (11) avec un engrenage (12) pour l'entraînement d'un coulisseau de raccordement de crémone (13), prévu pour le couplage avec une crémone (7), avec un couplage (21) pour l'établissement ou la séparation d'un flux par force entre le moteur électrique (11) et le coulisseau de raccordement de crémone (13), et avec un électro-aimant (20) pour le contrôle du couplage (21), **caractérisé en ce que** l'électro-aimant (20) forme, avec une paire de roues dentées (17) de l'engrenage (12), une unité constructive pour le contrôle du couplage (21).

2. Entraînement motorisé selon la revendication 1, **caractérisé en ce que** les roues dentées (18, 19) de la paire de roues dentées (17) sont montées de manière rotative sur l'électro-aimant (20).

3. Entraînement motorisé selon la revendication 1 ou 2, **caractérisé en ce que** le couplage (21) comprend une denture axiale (28) disposée entre les deux roues dentées (18, 19) de la paire de roues dentées (17).

4. Entraînement motorisé selon au moins l'une des revendications 1 à 3, **caractérisé en ce que** le couplage (21) est précontraint par un élément à ressort (22) dans la position séparant le flux de force.

5. Entraînement motorisé selon au moins l'une des revendications 1 à 4, **caractérisé en ce que** la roue dentée de grand diamètre (18) est conçue comme une roue à vis sans fin.

6. Entraînement motorisé selon au moins l'une des revendications 1 à 5, **caractérisé en ce qu'**un corps de bobine (25) de l'électro-aimant (20) entoure de manière concentrique l'axe de rotation de la paire de roues dentées (17).

7. Entraînement motorisé selon au moins l'une des revendications 1 à 6, **caractérisé en ce que** l'électro-aimant (20) est fixé dans un boîtier (10) de l'entraînement motorisé (6).

8. Entraînement motorisé selon au moins l'une des revendications 1 à 7, **caractérisé en ce qu'**une armature (23) de l'électro-aimant (20) s'étend sur une partie de la roue dentée de grand diamètre (18) de la paire de roues dentées (17).

9. Entraînement motorisé selon la revendication 8, **caractérisé en ce que** l'armature (23) est reliée avec un tenon (24) disposé dans l'axe de rotation de la paire de roues dentées (17).
